# EUROPEAN PATENT SPECIFICATION

(11) **EP 2 983 017 B1**
(45) Date of publication and mention of the grant of the patent: **26.05.2021**
(21) Application number: 14778465.6
(22) Date of filing: 01.04.2014
(51) Int. Cl.: B32B 27/08, B32B 3/30, B32B 7/06, B32B 27/34, B32B 27/36, G02B 3/00, G02F 1/1335, G02B 5/02, B29D 7/01

(54) **OPTICAL SHEET AND METHOD FOR MANUFACTURING SAME**
OPTISCHE FOLIE UND VERFAHREN ZU DEREN HERSTELLUNG
FEUILLE OPTIQUE ET SON PROCÉDÉ DE FABRICATION

(30) Priority: 02.04.2013 JP 2013076598
(43) Date of publication of application: 10.02.2016
(73) Proprietor: Mitsubishi Gas Chemical Company, Inc., Tokyo 100-8324 (JP); MGC Filsheet Co., Ltd., Saitama 359-1164 (JP)
(72) Inventor: KAKINOKI Osamu, Tokyo 125-8601 (JP); TAKEDA Masahide, Tokyo 125-8601 (JP); SUGIYAMA Masataka, Tokyo 125-8601 (JP)
(74) Representative: Hoffmann Eitle
(86) International application number: PCT/JP2014/059613
(87) International publication number: WO 2014/163067

(56) References cited:
- FR-A1- 2 797 215
- JP-A- H02 265 746
- JP-A- H06 171 640
- JP-A- H06 171 641
- JP-A- 2002 103 410
- JP-A- 2008 518 268
- JP-A- 2012 066 410
- US-A1- 2004 043 234
- US-A1- 2005 276 980

## Description

### TECHNICAL FIELD

The present invention relates to an optical sheet and a method for manufacturing the same. The optical sheet according to the present invention is preferably usable for improving the luminance or viewing angle of various types of displays including TVs, illumination equipment, and various types of display devices including digital signages.

### BACKGROUND ART

For manufacturing a thermoplastic resin sheet by melt extrusion molding, a shaping cooling roll having a fine uneven structure at a surface thereof is often used. The fine uneven structure is transferred to a surface of the sheet, so that the surface of the molded sheet formed of a thermoplastic resin has various functions. For example, a roll having a fine prism structure at a surface thereof is used. The prism structure is transferred to the surface of the sheet. In this case, the sheet manufactured by melt extrusion molding is a highly functional luminance-improving sheet.

Such a sheet is generally manufactured by melt extrusion molding as follows. A thermoplastic resin sheet in a melted state flowing out from a lip of a T-die or a coat hanger die is put into pressure contact with a shaping cooling role having a fine uneven structure at a surface thereof and a pressure-contact roll. In general, as the sheet is thinner, the transferability of the fine uneven structure tends to be decreased. Reasons for this are that the sheet-shaped melted resin is easily cooled in an area called an "air gap" from the lip of the die to a roll pressure-contact position (position at which the sheet is put into pressure contact with the shaping cooling roll and the pressure-contact roll) and that the sheet is solidified relatively quickly at the roll pressure-contact position due to, for example, heat transfer to the shaping cooling roll.

In order to improve the transferability of the fine uneven structure to a thin sheet by melt extrusion molding, attempts such as raising the set temperature of the die or roll, raising the contact pressure or the like have been made. However, when the set temperature of the die or the roll is too high, the thermoplastic resin is not cooled to be solidified sufficiently quickly during a time period from when the sheet is pressed between the shaping cooling roll and the pressure-contact roll to when the sheet is peeled off from the shaping cooling roll. As a result, the molded sheet adheres to the shaping cooling roll. This causes a flaw called a "peeling mark" to the external appearance of the sheet. For this reason, there is a limit on raising the set temperature of the die or the roll. When the contact pressure is too high, in the case where the roll is not sufficiently rigid, roll bending occurs. This makes it difficult to control the thickness of the molded sheet or makes it difficult to transfer the uneven structure uniformly.

Japanese Laid-Open Patent Publication No. 2012-66410 describes a method for manufacturing a shape-transfer-type optical sheet by use of melt extrusion molding. This method includes a step of layering, by coextrusion, a first layer formed of a protective film that is easy to peel and a second layer formed of a film having an optical shape. The first layer formed of the protective film is formed of a polyethylene-based resin or a polypropylene-based resin, and the first layer and the second layer are layered such that the optical shape of the second layer does not contact the first layer formed of the protective film.

US 2005/0276980 A1 discloses an embossable film for creating holograms and diffraction gratings and methods of producing embossable films.

FR 2 797 215 A1 discloses an extruded product comprising a polycarbonate layer, a intermediate layer of an adhesive material and a layer of thermoplastic material of polyamide 10, 11, 12 and/or 13.

### CITATION LIST

### PATENT LITERATURE

Patent Document 1: Japanese Laid-Open Patent Publication No. 2012-66410

### SUMMARY OF INVENTION

### TECHNICAL PROBLEM

The method for producing an optical sheet described in Japanese Laid-Open Patent Publication No. 2012-66410 is mainly proposed so that when the optical sheet is wound into a roll, the front surface and the rear surface of the sheet are prevented from being rubbed against each other and thus scratched. It is described as secondary effects that, for example, the ease of handling is improved, the cost is decreased, and a matte pattern is provided to the rear surface of the optical sheet. However, this method is not intended to improve the transferability of the fine uneven structure during the melt extrusion molding. The first layer formed of the protective film is formed of a polyethylene-based resin or a polypropylene-based resin. Therefore, in the case where the crystallinity of the resin is high, the sheet is easily curled due to a difference in the volume shrinking amount between the materials of the two layers at the time when the sheet is cooled to be solidified. This causes a problem that the first layer and the second layer are peeled off from each other unintentionally. In addition, these resins are basically molded at a low temperature. When the set temperature of the die or the like is raised in an attempt to increase the transferability of the fine uneven structure, there occurs a problem that, for example, the resin is decomposed and the external appearance is adversely influenced. Namely, in the case where a resin that is molded at a high temperature and is an amorphous polar polymer material, such as a polycarbonate resin, is used, it is highly difficult to use, as a material to be put into contact with such a resin, a polyolefin-based resin, which is molded at a relatively low temperature and is a non-polar polymer material with high crystallinity.

Therefore, the present invention has an object of providing a method for manufacturing an optical sheet that prevents a sheet from being curled or being adversely influenced in terms of the external appearance during melt extrusion molding and improves the transferability of a fine uneven structure, and a highly functional optical sheet manufactured by such a method.

### SOLUTION TO PROBLEM

The present invention is as follows.
(1) An optical sheet including a first layer containing a polycarbonate resin and a second layer containing an amorphous polyamide resin, the first layer and the second layer being layered by coextrusion molding, wherein:
   the first layer and the second layer are peelable from each other at an interface therebetween;
   at least one of a surface of the first layer not a surface as the interface, and a surface of the second layer not a surface as the interface, has a fine uneven shape formed thereat; and
   the polycarbonate resin contained in the first layer and the amorphous polyamide resin contained in the second layer have a glass transition temperature difference in the range of ±40°C.
(2) The optical sheet according to (1) above, wherein the first layer and/or the second layer has a thickness in the range of 50 to 250 µm.
(3) The optical sheet according to (1) or (2) above, wherein the polycarbonate resin contained in the first layer and the amorphous polyamide resin contained in the second layer have a melt viscosity ratio in the range of 1:5 to 5:1 at 260°C and a shearing speed of 100 s⁻¹.
(4) The optical sheet according to any one of (1) through (3) above, wherein a peel strength between the first layer and the second layer in a 180-degree peel test is in the range of 1 to 100 N/m in the case where a test speed is 150 mm/min. and one of the first layer and the second layer to be chucked with a clamp for scanning has a thickness of 100 to 150 µm.
(5) The optical sheet according to any one of (1) through (4) above, wherein the fine uneven shape is either one of a matte shape, a prism shape and a microlens shape.
(6) A method for manufacturing an optical sheet, comprising the step of layering a first layer containing a polycarbonate resin and a second layer containing an amorphous polyamide resin to form a layered body having a sheet shape by coextrusion molding;
   wherein the layered body including the first layer and the second layer is pressed between a shaping cooling roll having a fine uneven shape at a surface thereof and a pressure-contact roll to provide a fine uneven shape to at least one of the surfaces of the layered body;
   wherein the optical sheet is as defined in any one of (1) through (5) above.
(7) The method for manufacturing an optical sheet according to (6) above, wherein the pressure-contact roll is a metal rigid roll or a metal elastic roll having a surface plated with a metal material.

### ADVANTAGEOUS EFFECTS OF INVENTION

The optical sheet according to the present invention includes a first layer containing a polycarbonate resin and a second layer containing an amorphous polyamide resin, the first layer and the second layer being layered by coextrusion molding. The first layer and the second layer are peelable from each other at an interface therebetween. At least one of a surface of the first layer not a surface along the interface, and a surface of the second layer not a surface along the interface, has a fine uneven shape formed thereat. Such an optical sheet including a plurality of layers can make the entirety sheet thick at the time of melt extrusion molding, namely, at the time of transfer of the fine uneven structure. Therefore, the layered body during the molding can hold a sufficient amount of heat to prevent rapid cooling of the resins in an air gap area or when the layered body is put into contact with the rolls. This significantly improves the transferability of the fine uneven structure. Since the temperature at the time of molding does not need to be significantly high in order to improve the transferability of the fine uneven structure, the external appearance of the molded sheet can be easily kept good. After the coextrusion molding, the first layer formed of the polycarbonate resin and the second layer formed of the amorphous polyamide resin may be easily separated from each other by peeling. Therefore, the optical sheet finally manufactured by molding is very thin although the transfer ratio of the fine uneven structure is high.

In addition, the polycarbonate resin and the amorphous polyamide resin have an appropriate peel strength. Therefore, the resins are not peeled from each other at the interface while being subjected to coextrusion molding to be formed into a sheet- shape. One of the layers that does not have the shape transferred thereto even acts as a protective film. Since the polyamide resin is amorphous and the difference in the glass transition temperature between the polycarbonate resin and the amorphous polyamide resin is within ±40°C, the molding shrinking amount of the polyamide resin can be substantially the same as that of the polycarbonate resin. Thus, curl or the like does not occur.

The resin of the layer that is used to increase the thickness of the layered body at the time of coextrusion molding and is peeled thereafter and thus is not used for a final product may be recovered and reused.

### BRIEF DESCRIPTION OF DRAWINGS

[FIG. 1] FIG. 1 is a schematic cross-sectional view of an optical sheet in embodiment 1 according to the present invention.
[FIG. 2] FIG. 2 schematically shows show peeling occurs to the optical sheet in embodiment 1 according to the present invention.
[FIG. 3] FIG. 3 is a schematic cross-sectional view of an optical sheet in embodiment 2 according to the present invention.
[FIG. 4] FIG. 4 is a schematic cross-sectional view of an optical sheet in embodiment 3 according to the present invention.
[FIG. 5] FIG. 5 shows a method for manufacturing an optical sheet according to the present invention.

### DESCRIPTION OF EMBODIMENTS

Hereinafter, the present invention will be described in more detail

### (I) Optical sheet

According to the present invention, a super-thin optical sheet having a fine uneven structure transferred to a surface thereof at a high transfer ratio is manufactured by melt extrusion molding. For manufacturing such an optical sheet, a polycarbonate resin and an amorphous polyamide resin described later in detail are used in combination. The polycarbonate resin and the polyamide resin are both a polar material and have an appropriate adhesive force. Therefore, unlike in the case where a resin that is a non-polar material and has a weak inter-molecular force, such as a polyolefin resin or the like, is used, an inconvenience that, for example, peeling occurs during the molding is avoided.

A polyolefin-based resin often has crystallinity and is shrunk by a very large amount when being solidified. Therefore, when a polyolefin-based resin and an amorphous material such as a polycarbonate resin or the like are subjected to coextrusion molding, there is a high possibility that curl occurs and the sheet is rolled or that the resins are peeled off from each other at the interface during the molding. In the optical sheet according to the present invention, an amorphous polyamide resin, among, polyamide resins, is used. The amorphous polyamide resin is shrunk by substantially the same amount as the polycarbonate resin when being solidified. Therefore, the problem that curl occurs or the like is avoided.

A polyolefin-based resin is molded at a very different temperature from the temperature at which a polycarbonate resin is molded, and therefore, when being subjected to coextrusion molding with a polycarbonate resin, is often decomposed or gelated. This tendency is especially strong for a copolymer material containing a polyolefin-based resin and a second or a third component in order to decrease the crystallinity of the polyolefin-based resin. In order to transfer a fine uneven structure to a surface of a sheet at a high transfer ratio, the temperature at which the polycarbonate resin is extruded needs to be raised. However, there is a limit on the set temperature of the polyolefin-based resin. Therefore, even when the polycarbonate resin and the polyolefin-based resin are subjected to coextrusion molding, the transferability is not improved. In addition, the polyolefin-based resin has a tendency of significantly increasing the adhesiveness thereof in a melted state. Therefore, when being pressed between a shaping cooling roll and a pressure-contact roll, the polyolefin-based resin may adhere to the pressure-contact roll. In this case, a sheet is not even manufactured by coextrusion.

By contrast, the optical sheet according to the present invention uses an amorphous polyamide resin as a material to be coextruded with the polycarbonate resin. The amorphous polyamide resin is molded in a temperature range substantially the same as the temperature range in which the polycarbonate resin is molded, and is subjected to coextrusion molding with no problem at a high temperature, which is advantageous for transfer at a high transfer ratio. For this reason, the shape transferability during the melt extrusion molding is improved. Since an amorphous polyamide resin having a glass transition temperature that is different by ±40°C or less, preferably ±30°C or less, and more preferably ±20°C or less from that of the polycarbonate resin is used, the temperature of the die or the roll can be set appropriately.

The optical sheet has outer surfaces, more specifically, has an outer surface of a first layer formed of a polycarbonate resin (described later) that is opposite to a surface along an interface between the two layers, and an outer surface of a second layer formed of an amorphous polyamide resin (described later) that is opposite to a surface along the interface. At least one of these surfaces has a fine uneven structure formed thereat. More specifically, a fine uneven shape that is one of a matte shape (light scattering), a prism shape (light collection) and a microlens shape (light scattering and collection) is formed. In the case where the matte shape is formed, the optical sheet has an Ra (arithmetic average roughness) of, for example, 0.1 to 5.0 µm, preferably 1.0 to 3.0 µm. In the case where the prism shape is formed, the optical sheet has a depth of a V-groove of, for example, 150 µm or less, preferably 100 µm or less, and a vertex angle of the V-groove in the range of, for example, 30 to 150 degrees. The ranges of values of the depth and the vertex angle of the V-groove are as described above because of the entire thickness of the optical sheet according to the present invention. In the case where the microlens shape is formed, the optical sheet has a lens diameter of, for example, 1 to 100 µm, preferably 5 to 50 µm.

### (II) Polycarbonate resin

According to the present invention, the first layer of the optical sheet is formed of a polycarbonate resin. Usable examples of the polycarbonate resin include an aromatic polycarbonate resin, an aliphatic polycarbonate resin, and the like. Among these, an aromatic polycarbonate resin is preferable.

An aromatic polycarbonate resin is a thermosplastic polymer or copolymer obtained by reacting an aromatic dihydroxy compound, or an aromatic dihydroxy compound and a small amount of polyhydroxy compound, with phosgene or carbonate ester, and may be branched.

There is no specific limitation on the method for forming an aromatic polycarbonate resin. A phosgene method (interface polymerization method) or a melting method (ester interchange method), which are each conventionally known, is usable. In the case where the melting method is used, a polycarbonate resin having the amount of an OH group as a terminal group adjusted is usable.

Aromatic dihydroxy compounds usable as one material of the aromatic polycarbonate resin include bis(hydroxyaryl)alcanes such as 2,2-bis(4-hydroxyphenyl)propane (= bisphenol A), bis(4-hydroxydiphenyl)methane, 1,1-bis(4-hydroxyphenyl)ethane, 2,2-bis(4-hydroxyphenyl)butane, 2,2-bis(4-hydroxyphenyl)octane, bisbis(4-hydroxydiphenyl)phenylmethane, 2,2-bis(4-hydroxydiphenyl-3-methylphenyl)propane, 1,1 -bis(4-hydroxy-3 -tert-butylphehyl)propane, 2,2-bis(4-hydroxy-3-bromophenyl)propane, 2,2-bis(4-hydroxy-3,5-dibromophenyl)propane, 2,2-bis(4-hydroxy-3,5-dichlorophenyl)propane, and the like; bis(hydroxyaryl)cycloalkanes such as 1,1-bis(4-hydroxyphenyl)cyclopentane, 1,1-bis(4-hydroxyphenyl)cyclohexane, and the like; dihydroxydiarylethers such as 4,4'-dihydroxydiphenylether, 4,4'-dihydroxy-3,3'-dimethyldiphenylether, and the like; dihydroxydiarylsulfides such as 4,4'-dihydroxydiphenylsulfide, 4,4'-dihydroxy-3,3'-dimethyldiphenylsulfide, and the like; dihydroxydiarylsulfoxides such as 4,4'-dihydroxydiphenylsulfoxide and the like; dihydroxydiarylsulfones such as 4,4'-dihydroxydiphenylsulfone, 4,4'-dihydroxy-3,3'-dimethyldiphenylsulfone, and the like; hydroquinones; resorcinols; 4,4-dihydroxydiphenyl; and the like. Bisphenol A is preferable. A compound formed of any one of the above-described aromatic dihydroxy compounds and one or more tetraalkylphosphonium sulfonate bonded thereto may be used.

A branched aromatic polycarbonate resin is obtained as follows. Any one of the above-described aromatic dihydroxy compounds is partially substituted with a branching agent, specifically, a polyhydroxy compound such as phloroglucin, 4,6-dimethyl-2,4,6-tri(4-hydroxyphenyl)heptene-2,4-6-dimethyl-2,4,6-tri(4-hydroxyphenyl)heptane, 2,6-dimethyl-2,4,6-tri(4-hydroxyphenyl)heptene-3,1,3,5-tri(4-hydroxyphenyl)benzene, 1,1,1-tri(4-hydroxyphenyl)ethane, or the like; or a compound such as 3,3-bis(4-hydroxyaryl)oxyindole (= isatinbisphenol), 5-chlorisatin, 5,7-dichlorisatin, 5-bromisatin, or the like. The amount of such a compound usable as a substituent is 0.01 to 10 mol%, preferably 0.1 to 2 mol%, with respect to the amount of the aromatic dihydroxy compound.

Preferable among the above-described aromatic polycarbonate resins are a polycarbonate resin derived from 2,2-bis(4-hydroxyphenyl)propane and a polycarbonate copolymer resin derived from a compound of 2,2-bis(4-hydroxyphenyl)propane and another aromatic dihydroxy compound. Alternatively, a copolymer mainly containing a polycarbonate resin such as, for example, a copolymer with a polymer or oligomer having a siloxane structure. Still alternatively, two or more among the above-described aromatic polycarbonate resins may be mixed.

In order to adjust the molecular weight of the aromatic polycarbonate resin, a monohydric aromatic hydroxyl compound is usable. Usable compounds include, for example, m- and p-methylphenol, m- and p-propylphenol, p-tert-butylphenol, p-long chain alkyl-substituted phenol, and the like.

The aromatic polycarbonate resin used for the present invention has a viscosity-average molecular weight [Mv] of preferably 10,000 to 40,000, and more preferably 15,000 to 35,000, converted from the solution viscosity measured at a temperature of 25°C by use of methylene chloride as a solvent, from the points of view of extrusion moldability, strength and the like. A viscosity-average molecular weight of 15,000 or greater improves the mechanical strength, and a viscosity-average molecular weight of 35,000 or less tends to suppress decrease of, and thus to improve, fluidity. This is preferable from the point of view of molding processability.

In the above-described range of viscosity-average molecular weight, 10,000 to 25,000 is preferable, 15,000 to 24,000 is more preferable, and 17,000 to 23,000 is especially preferable. Two or more types of aromatic polycarbonate resins having different viscosity-average molecular weights may be mixed. In this case, an aromatic polycarbonate resin having a viscosity-average molecular weight outside the above-described preferable range may be used. The viscosity-average molecular weight of the mixture is preferably in the above-described range.

To the polycarbonate resin, any of various additives commonly used may be added. Usable additives include, for example, an antioxidant, a coloring preventing agent, an ultraviolet absorber, a light scattering agent, a flame retardant, a releasing agent, a lubricant, an antistatic agent, a dye, a pigment and the like. These additives are contained in the polycarbonate resin at any amount as long as the transparency of the optical sheet is maintained. In order to prevent the rolls from, for example, being stained with the additives during the molding to manufacture the sheet, the content of the additives is preferably 1% by weight or less.

In addition to the additives, a different type of polymer material may be blended with the polycarbonate resin. There is no specific limitation on the type of polymer to be blended as long as the transparency of the optical sheet is maintained. An amorphous polyester-based resin and a special acrylic resin compatible with the polycarbonate resin, for example, are preferable. In this case, it is preferable that the polycarbonate resin is the main component from the point of view of coextrusion moldability with the amorphous polyamide resin. The blending ratio (weight ratio) of the polycarbonate resin: the different type of polymer material is preferably 100:0 to 50:50, and is more preferably 100:0 to 70:30. In the case where such a blend of the polycarbonate resin and a different type of polymer material is used, the difference in the glass transition temperature between the amorphous amide resin and the blend can be easily adjusted to be within a predetermined range.

In order to adjust the difference in the glass transition temperature between the polycarbonate resin and the amorphous amide resin to be within a predetermined range, two or more types of (aromatic) polycarbonate resins may be blended as described above, or a copolymer of two or more types of monomers may be formed, needless to say.

The first layer formed of the polycarbonate resin described above typically has a thickness in the range of 50 to 250 µm, preferably in the range of 50 to 200 µm, and more preferably in the range of 50 to 150 µm.

### (III) Amorphous polyamide resin

According to the present invention, the second layer of the optical sheet is formed of an amorphous polyamide resin. In this specification, the term "polyamide" resin refers to a polymer having an amide (-NHCO-) bond in a main chain. The polyamide resin encompasses a polyamide compound obtained by ring opening polymerization of lactam, a polyamide compound obtained by self-condensation of ω-aminocarboxylic acid, a polyamide compound obtained by condensing diamine and dicarboxylic acid, and a copolymer thereof.

The amorphous polyamide used in the embodiments of the present invention is a polyamide, among polyamide resins, that does not have a melting point. The amorphous polyamide is, for example, a polyamide obtained by polymerizing a material monomer having an asymmetric chemical structure among dicarboxylic acid, diamine, lactam and aminocarboxylic acid included in polyamide.

Examples of the amorphous polyamide include, for example, polyamide 12 (PA12)-containing copolymers such as PA12/MACMI (laurolactam/3,3-dimethyl-4,4-diaminocyclohexylmethane, isophthalic acid), PA12/MACMT (laurolactam/3,3-dimethyl-4,4-diaminocyclohexylmethane, terephthalic acid), and the like; and PA61/6T copolymers such as PAMACM12 (3,3-dimethyl-4,4-diaminocyclohexylmethane, dodecanedicarboxylic acid), PACM12 (1,3-bis(aminomethyl)cyclohexane, dodecanedicarboxylic acid), PA61/6T, PA61/6T/MACMI, and the like. The above expressions of the amorphous polyamides are in conformity to JIS-K6920-1.

There is no specific limitation on the method for forming the amorphous polyamide. Any conventionally method is usable. A commercially available amorphous polyamide may be usable. Examples of such an amorphous polyamide include PA12/MACMI (trade name: Grilamid (registered trademark) TR55 produced by EMS), PA MACM 12 (trade name: Grilamid (registered trademark) TR90 produced by EMS), PA MC 12 (trade name: Trogamid (registered trademark) CX produced by Degussa), PA12/MACMT (trade name: Cristamid (registered trademark) MS produced by Arkema), PA61/6T (trade name: Novamid (registered trademark) X21 produced by Mitsubishi Engineering-Plastics Corporation), and the like.

To the amorphous polyamide resin, any of various additives commonly used may be added. Usable additives include, for example, an antioxidant, a coloring preventing agent, an ultraviolet absorber, a light scattering agent, a flame retardant, a releasing agent, a lubricant, an antistatic agent, a dye, a pigment and the like. These additives are contained in the amorphous polyamide resin at any amount as long as the transparency of the optical sheet is maintained. In order to prevent the rolls from, for example, being stained with the additives during the molding to manufacture the sheet, the content of the additives is preferably 1% by weight or less.

In addition to the additives, a different type of polymer material may be blended with the amorphous polyamide resin. There is no specific limitation on the type of polymer to be blended as long as the transparency of the optical sheet is maintained. A polyester-based resin, for example, is preferable. In this case, it is preferable that the amorphous polyamide resin is the main component from the point of view of coextrusion moldability with the polycarbonate resin. The blending ratio (weight ratio) of the amorphous polyamide resin: the different type of polymer material is preferably 100:0 to 50:50, and is more preferably 100:0 to 70:30. In the case where such a blend of the amorphous polyamide resin and a different type of polymer material is used, the difference in the glass transition temperature between the polycarbonate resin and the blend can be easily adjusted to be within a predetermined range.

In order to adjust the difference in the glass transition temperature between the polycarbonate resin and the amorphous amide resin to be within a predetermined range, a plurality of types of amorphous polyamide resins may be blended, for example.

The second layer formed of the amorphous polyamide resin described above typically has a thickness in the range of 50 to 250 µm. Considering that the shape may be provided to the side of the amorphous polyamide resin, the thickness of the second layer is preferably in the range of 50 to 200 µm, and is more preferably in the range of 50 to 150 µm.

### (IV) Layered body

According to the present invention, the polycarbonate resin and the amorphous polyamide resin described above are layered into a sheet by coextrusion molding, so that a layered body including a first layer and a second layer is formed.

In order to subject the polycarbonate resin and the amorphous polyamide resin into coextrusion molding, the melt viscosities of both of the resins need to be matched to each other to a highest possible degree in the range of the set temperatures at the time of melt extrusion molding. If the melt viscosities of the resins are different from each other too much, a wavy pattern called a "flow mark" may be formed; or in a worst case, the resins may not be layered in the entirety of the width direction of the sheet, or the thickness distribution may be too large. In general, a central value in the range of set temperatures for performing melt extrusion molding on the polycarbonate resin is about 260°C, and a central value in the range of shearing speeds at the time of melt extrusion molding is about 100 S⁻¹. Therefore, the melt viscosity ratio of the resins at 260°C at such a shearing speed is preferably in the range of 1:5 to 5:1, and is more preferably in the range of 1:3 to 3:1. The polycarbonate resin exhibits a property that the viscosity curve is drastically changed in an area of the shearing speed around 100 S⁻¹. For this reason, the melt viscosity at such a shearing speed is usable to determine whether the coextrusion molding is possible or not, so that it is easy to select an appropriate material.

The amorphous polyamide resin is highly transparent, which provides an advantage of making an external appearance investigation easy even in the case where being layered with the polycarbonate resin. The amorphous polyamide resin is a uniform material and is shrunk uniformly entirely when being molded. Therefore, there is no undesirable possibility that the interface of the amorphous polyamide resin is roughened to decrease the light transmittance.

In the case where there is a layer, at a surface of which the fine uneven shape is not to be formed, the polycarbonate resin or the amorphous polyamide resin forming such a layer does not need to be transparent. Therefore, such a polycarbonate resin or amorphous polyamide resin may contain a coloring agent, an inorganic filler or the like as long as an appropriate peelability is maintained. A preferable amount of the inorganic filler is, for example, 1 to 30% by weight.

### (V) Method for manufacturing the optical sheet

The optical sheet according to the present invention is manufactured as follows. The above-described layered body including a polycarbonate resin layer and a peelable amorphous polyamide resin layered on a surface of the polycarbonate resin layer is manufactured by a coextrusion molding device described below. The coextrusion molding device includes an extruder extruding a polycarbonate resin and an extruder extruding an amorphous polyamide resin. The schematic size of each of the extruders is determined based on the layer ratio of the layered body. The temperature of the extruder for the polycarbonate resin is usually 230 to 320°C, and is preferably 270 to 300°C in order to raise the transferability of the fine uneven shape. The temperature of the extruder for the amorphous polyamide resin may be changed to be suitable to the grade of the material to be used. In the present invention, it is desirable that the amorphous polyamide resin and the polycarbonate resin have substantially the same melt viscosity. In this case, the extruders for the resins have substantially the same temperature as each other. This prevents any inconvenience from occurring at the time of layering. In order to remove foreign substances from the resins, it is preferable to provide a polymer filter in each extruder at a position upstream with respect to the die.

The two types of melted resins may be layered by use of a known method such as a multi-manifold method, a field block method or the like. In the case where the multi-manifold die is used, the melted resins layered in the die are molded to have a sheet shape inside the die, and pressed between a shaping cooling roll having a fine uneven shape formed at a surface thereof and a pressure-contact roll. As a result, a sheet-shaped molded body having a fine uneven shape transferred to a surface of the polycarbonate resin or a surface of the amorphous polyamide resin is formed. The sheet-shaped molded body has the fine uneven shape fixed while passing through the shaping cooling roll, and thus the layered body is formed. The melted resins layered by a field block are guided to a sheet-molding die such as a T-die or the like to be molded to have a sheet-shape, and pressed between the shaping cooling roll having a fine uneven shape formed at a surface thereof and the pressure-contact roll. As a result, a layered body having a fine uneven shape transferred to a surface of the polycarbonate resin or a surface of the amorphous polyamide resin is formed. The set temperature of the die is usually 250 to 320°C, and is preferably 270 to 300°C. The set temperature of the shaping cooling roll is usually 100 to 190°C, and is preferably 110 to 180°C, in the case where the fine uneven shape is to be transferred to the surface of the polycarbonate resin. In the case where the fine uneven structure is to be transferred to the surface of the amorphous polyamide resin, it is preferable that the set temperature of the shaping cooling roll is lower by about 5°C to 30°C than the glass transition temperature of the amorphous polyamide resin. As the rolls in a sheet molding device, suitable rolls among vertical rolls and horizontal rolls may be used.

As the pressure-contact roll, a suitable roll among a metal rigid roll, a metal elastic roll, a rubber roll and the like is usable. In the case where the metal rigid roll or the metal elastic roll is used, the set temperature of the pressure-contact roll is preferably lower by about 5°C to 30°C than the glass transition temperature of the resin to be in contact with the pressure-contact roll. In the case where the robber roll is used, the pressure-contact roll may be occasionally set to 100°C or less by use of a coolant because the cooling efficiency of the robber roll is low.

The thickness ratio of the polycarbonate resin layer and the amorphous polyamide resin layer may be fine-adjusted by adjusting the ejection amounts of the extruders. The ejection amounts are adjusted by changing the rotation rates of the extruders. The total thickness of the multi-layer sheet may be adjusted by adjusting the ejection amounts on the upstream side of the sheet molding device (extruders) or by changing the linear viscosity on the downstream side of the sheet molding device (roll unit).

The shaping cooling roll having the fine uneven structure formed at the surface thereof may be produced as follows. An iron-core roll is plated, and then is processed with any of various existing patterning technologies including cutting by use of a diamond bite, cutting by use of a grinder, etching that provides selective corrosion, and the like.

The plating may be copper plating, nickel plating or the like. In the case of melt extrusion molding, nickel-phosphorus plating, which is highly durable and provides a high surface hardness, is most preferable because the melt extrusion molding applies a high linear pressure. The nickel-phosphorus plating may be performed by an electric plating method or an electroless plating method. Either method is usable. Alternatively, a special shaping cooling roll including a ceramic layer or a metal layer having a low thermal conductivity as an underlying layer may be used. In this case, the cooling of the melted resins is delayed, so that the transferability of the fine uneven shape is improved.

The peel strength between the polycarbonate resin and the amorphous polyamide resin in a 180-degree peel test is preferably 1 N/m or greater. In this case, a trouble such that the resin layers are peeled off from each other during molding does not occur. There is no specific upper limit on the peel strength. If the adhesive force is too strong, the ease of handling is decreased. Therefore, a preferable value of the peel strength is, for example, 100 N/m.

More specifically, the peel strength between the first layer and the second layer of the optical sheet is in the range of 1 to 100 N/m, and is preferably in the range of 2 to 50 N/m. These values of the peel strength are in the case where the peel test speed is set to 150 mm/min., and the thickness of the layer that is to be chucked by a clamp for scanning (the layer that is to be peeled off) is 100 to 150 µm.

In the case where an amorphous polyamide resin having a high transparency is used, the entire of the layered body is transparent. Therefore, it is very easy to check the external appearance of the optical sheet.

The interface between the polycarbonate resin layer and the amorphous polyamide resin layer may be matte. Such a matte interface is obtained by blending a resin filler or a different type of polymer material. The interface is roughened by physically causing unevenness, or the roughness of the interface is increased by locally providing a difference in the solidification speed or the shrinking amount.

The optical sheet having a shape at a surface thereof according to the present invention is obtained by coextrusion molding of a polycarbonate resin and an amorphous polyamide resin. Since the compatibility of the polycarbonate resin and the amorphous polyamide resin is relatively high, the interface therebetween has an appropriate peel strength. This suppresses various troubles which might otherwise be caused during the coextrusion molding. In addition, the optical sheet has a large total thickness and therefore owns a relatively high thermal amount. This prevents excessive cooling of the melted resins in an air gap area.

This effect significantly improves the transferability of the fine uneven shape provided at the surface of the shaping cooling roll. The polycarbonate resin layer and the amorphous polyamide resin layer may be intentionally peeled off from each other. In this case, a very thin highly functional optical sheet is obtained. The surface to which the fine uneven shape is transferred may be the surface of the polycarbonate resin layer or the surface of the amorphous polyamide resin layer. Alternatively, a fine uneven shape may be provided also at a surface of the pressure-contact roll, so that both of the surfaces of the layered body have the fine uneven shape.

Hereinafter, the present invention will be described in more detail by way of embodiments and examples. The present invention is not limited to any of the following embodiments and examples.

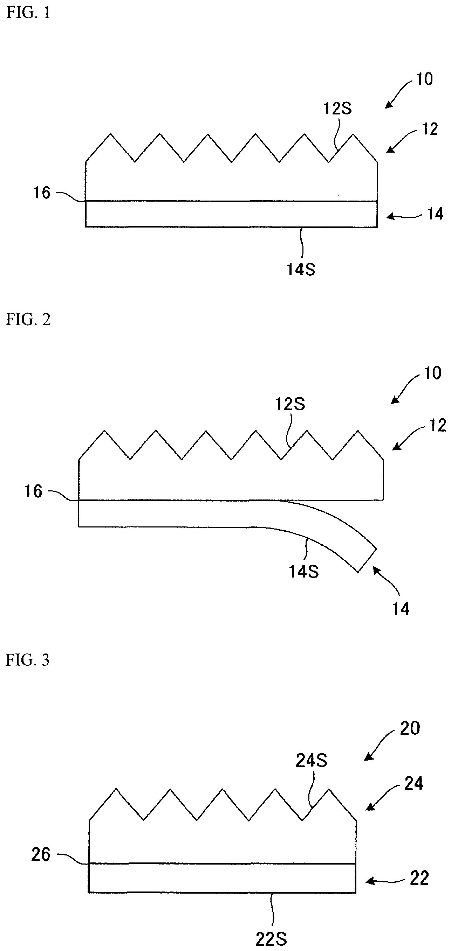

FIG. 1 is a schematic cross-sectional view of an optical sheet 10 in embodiment 1 according to the present invention. The optical sheet 10 in embodiment 1 includes a first layer 12 formed of a polycarbonate resin or a second layer 14 formed of an amorphous polyamide resin. The first layer 12 and the second layer 14 are layered so as to contact each other at a smooth interface 16. At an outer surface of the first layer 12, namely, a surface 12S on the side opposite to the interface 16, a fine uneven shape is formed. In the figure, the fine uneven shape is shown as being emphasized. An outer surface 14S of the second layer 14 is smooth. As shown in FIG. 2, the first layer 12 and the second layer 14 are peelable off from each other at the interface 16.

In an optical sheet 20 (FIG. 3) in embodiment 2, an outer surface 22S of a first layer 22 formed of a polycarbonate resin is smooth, whereas an outer surface 24S of a second layer 24 formed of an amorphous polyamide resin has a fine uneven shape formed thereat. Embodiment 2 is different from embodiment 1 on this point. The first layer 22 and the second layer 24 are peelable off from each other at an interface 26.

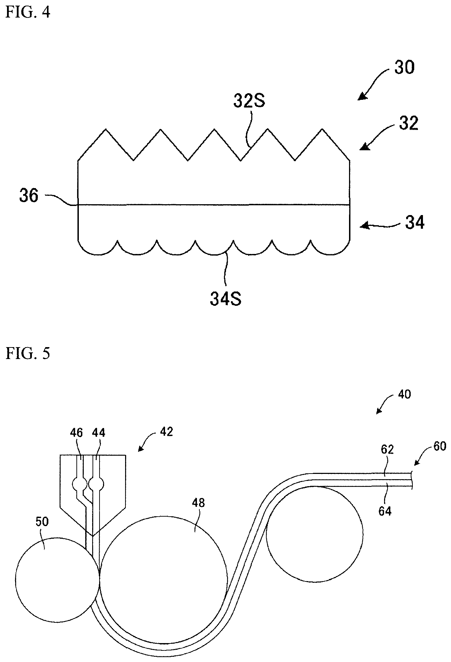

In an optical sheet 30 (FIG. 4) in embodiment 3, a first layer 32 formed of a polycarbonate resin and a second layer 34 formed of an amorphous polyamide resin each have a fine uneven shape formed at a surface thereof. Namely, a surface 32S of the first layer 32 and a surface 34S of the second layer 34 each have the fine uneven shape formed thereat. Embodiment 3 is different from embodiment 1 on this point.

The optical sheets 10, 20 and 30 in embodiments 1, 2 and 3 described above are all manufactured by a coextrusion molding device 40 that is partially shown in FIG. 5. A die 42 of the coextrusion molding device 40 has a first flow path 44 and a second flow path 46 formed therein. A heated polycarbonate resin and a heated amorphous polyamide resin are supplied to the respective flow paths, and are pressed in a gap between a shaping cooling roll 48 and a pressure-contact roll 50. Thus, the optical sheet is manufactured. The die 42 is a multi-manifold die.

The shaping cooling roll 48 has a surface shape corresponding to the fine uneven shape at the surface of the optical sheet to be manufactured. Therefore, appropriate resins are selected to be supplied to the first and second flow paths 44 and 46, so that the fine uneven shape is formed at a surface of a first layer 62 of a layered body 60. Thus, the optical sheet 10 (see FIG. 1) and the optical sheet 20 (see FIG. 3) are each manufactured. Instead of the pressure-contact roll 50, another shaping cooling roll (not shown) may be used. In this case, the fine uneven shape is formed at an outer surface of each of the first layer 62 and a second layer 64. Thus, the optical sheet 30 (see FIG. 4) is manufactured.

Now, examples of the present invention will be described.

### EXAMPLE 1

In example 1, Iupilon S-3000N (Tg: 145°C) produced by Mitsubishi Engineering-Plastics Corporation was used as the polycarbonate resin, and Grilamid TR XE 3805 (Tg: 153°C), i.e., a polyamide resin produced by EMS Co., Ltd., was used as the amorphous polyamide resin. The polycarbonate resin was plasticized by a 75 mmφ vent-equipped monoaxial extruder, and the amorphous polyamide resin was plasticized by a 40 mmφ vent-equipped monoaxial extruder. The polycarbonate resin and the amorphous polyamide resin were layered together and extruded to have a sheet-shape by a 800 mm-wide multi-manifold die (see the die 42 in FIG. 5) set to 280°C. The sheet-shaped melted resins flowing out of a lip of the die were transparent, and no conspicuous flaw was observed in the external appearance such as dot-like flaws, for example, gel-like or grain-like flaws, or stripe-like flaws.

The sheet-shaped layer of the melted resins was guided to, and caused to pass through, a polishing roll unit. Then, the extrusion amounts (screw rotation rates of the extruders) and the linear viscosity were changed to adjust the thicknesses of the resins. Specifically, the thickness of the polycarbonate resin layer was adjusted to be about 170 µm, and the thickness of the amorphous polyamide resin layer was adjusted to be about 130 µm, so that the total thickness of the multi-layer sheet was about 300 µm. In this case, the linear viscosity was 3 m/min. After the thickness adjustment was finished, the sheet was pressed between the shaping cooling roll having a diameter of 300 mmφ and set to 135°C and the metal elastic roll having a diameter of 300 mmφ and set to 130°C to transfer a fine uneven shape to a surface of the polycarbonate resin layer. The contact pressure (linear pressure) of the metal elastic roll was set to 20 kg/cm. The shaping cooling roll used has continuous V-grooves, each having a vertex angle or 90°, formed at a pitch of 80 µm. The V-grooves are provided along a circumferential direction of the roll. As a result of the transfer of the V-grooves, a prism sheet, namely, a luminance improving sheet (see FIG. 1) was obtained. The surface shape of the prism sheet manufactured by molding was measured by use of a three-dimensional shape measurement device NH-3N produced by Mitaka Kohki Co., Ltd. The average groove depth was 29.4 µm. The transfer ratio, represented by the ratio with the V-groove depth of the shaping cooling roll, was 73%. A 180-degree peel test was performed by use of autograph AGS-100 produced by Shimadzu Corporation. The peel strength between the polycarbonate resin layer and the amorphous polyamide resin layer was 2.7 N/m.

### COMPARATIVE EXAMPLE 1

In comparative example 1, only Iupilon S-3000N (Tg: 145°C), i.e., a polycarbonate resin produced by Mitsubishi Engineering-Plastics Corporation, was used to manufacture a prism sheet having a thickness of about 170 µm by molding. The main molding conditions were substantially the same as those in example 1. The transfer ratio of the prism sheet was 65%.

### COMPARATIVE EXAMPLE 2

In comparative example 2, only Iupilon S-3000N (Tg: 145°C), i.e., a polycarbonate resin produced by Mitsubishi Engineering-Plastics Corporation, was used to manufacture a prism sheet having a thickness of about 300 µm by molding. The main molding conditions were substantially the same as those in example 1. The transfer ratio of the prism sheet was 74%.

### COMPARATIVE EXAMPLE 3

In comparative example 3, Iupilon S-3000N produced by Mitsubishi Engineering-Plastics Corporation was used as the polycarbonate resin, and UBE nylon 103 (nylon-6 resin; Tg: 47°C; Tm: 225°C), i.e., a crystalline polyamide resin produced by Ube Industries, Ltd., was used as the polyamide resin. The main molding conditions were substantially the same as those in example 1. The results were as follows. The polyamide resin strongly adhered to the pressure-contact metal elastic roll. Even when the temperature of the metal elastic roll was decreased from 130°C to 80°C, no good sheet was obtained. A peel strength of the multi-layer sheet was measured before the melted resins were put into pressure contact with the pressure-contact roll. The peel strength was 3.4 N/m. The results of example 1 and comparative examples 1 through 3 are shown in Table 1.

**[Table 1]**

| | Example 1 | Comparative example 1 | Comparative example 2 | Comparative example 3 |
|---|---|---|---|---|
| PC resin type | A-1 | A-1 | A-1 | A-1 |
| PC resin Tg (°C) | 145 | 145 | 145 | 145 |
| PC resin viscosity (Pa·s) | 1000 | 1000 | 1000 | 1000 |
| PA resin type | B-1 | None | None | B-2 |
| PA resin Tg (°C) | 153 | - | - | 47 |
| PA resin viscosity (Pa·s) | 1100 | - | - | 530 |
| Surface to which the fine uneven structure is transferred | PC | PC | PC | PC |
| PC layer thickness (µm) | 170 | 170 | 300 | 170 |
| PA layer thickness (µm) | 130 | - | - | 130 |
| Die temperature (°C) | 280 | 280 | 280 | 280 |
| Shaping cooling roll temperature (°C) | 135 | 135 | 135 | 135 |
| Pressure-contact roll temperature (°C) | 130 | 130 | 130 | 130 |
| Linear pressure (kg/cm) | 20 | 20 | 20 | 20 |
| Linear viscosity (m/min) | 3 | 3 | 3 | 3 |
| Transfer ratio (%) | 73 | 65 | 74 | - |
| Peel strength (N/m) | 2.7 | - | - | 3.4 |
| Remarks | - | - | - | Not manufactured due to adhesion even when the pressure-contact roll temperature is 80°C |

| | | | | |
|---|---|---|---|---|
| A-1: Iupilon S-3000N (Mitsubishi Engineering-Plastics) B-1: Grilamid TR XE3805 (EMS) B-2: UBE nylon 1030B (Ube Industries) | | | | |

As can be seen from the results of example 1 and comparative examples 1 through 3 described above, in example 1, a polycarbonate resin and an amorphous polyamide resin were combined and subjected to coextrusion molding, and therefore, an optical sheet having a fine uneven shape transferred thereto at a high transfer ratio was manufactured by molding although the sheet had a small final thickness after peeling. As can be seen, the optical sheet in example 1 made thinner contributes to space savings for any of various display devices into which the optical sheet is incorporated.

By contrast, in comparative example 1, a problem of a low transfer ratio was recognized. This problem is considered to have occurred because a layer of an amorphous polyamide resin was not formed and the layered body was thinner at the time of coextrusion molding than in example 1. In comparative example 2, there was no problem with the transfer ratio, but the following problems were recognized. No protective layer was formed because the amorphous polyamide resin was not formed, and the sheet was too thick to be used for a wide range of applications as an optical sheet.

From a comparison of the results of example 1 and comparative example 3, it was confirmed that an amorphous polyamide resin was more moldable than a crystalline polyamide resin.

### EXAMPLE 2

In example 2, the grade of the polycarbonate resin was changed to Iupilon H-3000N (Tg: 142°C) produced by Mitsubishi Engineering-Plastics Corporation, the type of the amorphous polyamide resin was changed to Grivory G-21 (Tg: 125°C) produced by EMS, the set temperature of the die was changed to 270°C, and the set temperature of the pressure-contact metal elastic roll was changed to 120°C. Except for these points, sheeting was performed in exactly the same manner as in example 1. No trouble or the like occurred during the molding, and a multi-layer sheet having a very high level of external appearance was obtained. The prism transfer ratio of the obtained prism sheet was 83%, and the peel strength between the polycarbonate resin layer and the amorphous polyamide resin layer was 3.1 N/m.

### COMPARATIVE EXAMPLE 4

In comparative example 4, only Iupilon H-3000N, i.e., a polycarbonate resin produced by Mitsubishi Engineering-Plastics Corporation, was used to manufacture a single-layer prism sheet having a thickness of about 170 µm by molding. The main molding conditions were substantially the same as those in example 2. The transfer ratio of the prism sheet was 70%.

### COMPARATIVE EXAMPLE 5

In comparative example 5, only Iupilon H-3000N, i.e., a polycarbonate resin produced by Mitsubishi Engineering-Plastics Corporation, was used to manufacture a single-layer prism sheet having a thickness of about 300 µm by molding. The main molding conditions were substantially the same as those in example 2. The transfer ratio of the prism sheet was 78%.

### COMPARATIVE EXAMPLE 6

In comparative example 6, Iupilon H-3000N produced by Mitsubishi Engineering-Plastics Corporation was used as the polycarbonate resin, and Prime Polypro F113G, i.e., a polypropylene resin produced by Prime Polymer Co., Ltd., was used as a material to be coextruded with the polycarbonate resin, to manufacture a multi-layer sheet having a prism shape transferred to a surface of the polycarbonate resin layer. The main molding conditions were substantially the same as those in example 2. The above-mentioned polypropylene resin F113G is a highly crystalline homopolymer and is of a general-purpose grade, and thus has a relatively high linear coefficient of expansion. Thus, the multi-layer sheet was largely curled on the downstream side of the sheet molding device due to the difference in the molding shrinking amount between the amorphous polycarbonate resin and the polypropylene resin. As a result, the polycarbonate resin layer and the polypropylene resin layer were easily peeled off from each other. No multi-layer sheet sample was obtained while the adherence at the interface was maintained. Although the layers were peeled off during the molding, the prism transfer ratio of the prism sheet was measured. The prism transfer ratio was low at 68%.

### COMPARATIVE EXAMPLE 7

In comparative example 7, Iupilon H-3000N produced by Mitsubishi Engineering-Plastics Corporation was used as the polycarbonate resin, and MODIC P502, i.e., an adhesive polyolefin resin produced by Mitsubishi Chemical Corporation, was used as a material to be coextruded with the polycarbonate resin, to manufacture a multi-layer sheet having a prism shape transferred to a surface of the polycarbonate resin layer. The main molding conditions were substantially the same as those in example 2. The above-mentioned adhesive polyolefin resin is a copolymer containing a plurality of comonomer components. The comonomer components are added in order to improve the adhesiveness between the polyolefin-based resin, which is a nonpolar polymer material and the polar polymer material. The adhesive polyolefin resin is basically amorphous. Because of the small molding shrinking amount thereof, the adhesive polyolefin resin was subjected to coextrusion molding with the polycarbonate resin to manufacture a multi-layer sheet with no problem and was not peeled off on the downstream side of the sheet molding device. However, the adhesive polyolefin resin strongly adhered to the contact-pressure metal elastic roll. Even though the set temperature of the roll was decreased from 120°C to 90°C, the adhesion behavior was not suppressed. No good sheet was manufactured by molding. A multi-layer sheet before being put into pressure contact with the pressure-contact metal elastic roll was sampled and the peel strength thereof was measured. The peel strength was significantly high at 134 N/m, and the peelability was low. The results of example 2 and comparative examples 4 through 7 are shown in Table 2.

**[Table 2]**

| | Example 2 | Comparative example 4 | Comparative example 5 | Comparative example 6 | Comparative example 7 |
|---|---|---|---|---|---|
| PC resin type | A-2 | A-2 | A-2 | A-2 | A-2 |
| PC resin Tg (°C) | 142 | 142 | 142 | 142 | 142 |
| PC resin viscosity (Pa·s) | 580 | 580 | 580 | 580 | 580 |
| Coextruded resin type | B-3 | None | None | B-4 | B-5 |
| Coextruded resin Tg (°C) | 125 | - | - | - | - |
| Coextruded resin viscosity (Pa·s) | 280 | - | - | 480 | 860 |
| Surface to which the fine uneven shape is transferred | PC | PC | PC | PC | PC |
| PC layer thickness (µm) | 170 | 170 | 300 | 170 | 170 |
| Coextruded layer thickness (µm) | 130 | - | - | 130 | 130 |
| Die temperature (°C) | 270 | 270 | 270 | 270 | 270 |
| Shaping cooling roll temperature (°C) | 135 | 135 | 135 | 135 | 135 |
| Pressure-contact roll temperature (°C) | 120 | 120 | 120 | 120 | 90 |
| Linear pressure (kg/cm) | 20 | 20 | 20 | 80 | 20 |
| Linear viscosity (m/min) | 3 | 3 | 3 | 3 | 3 |
| Transfer ratio (%) | 82 | 70 | 78 | 68 | - |
| Peel strength (N/m) | 3.1 | - | - | 0 | 134 |
| Remarks | - | - | - | Largely curled; peeled during molding | Not manufactured due to adhesion to the metal roll |

| | | | | | |
|---|---|---|---|---|---|
| A-2: Iupilon H-3000N (Mitsubishi Engineering-Plastics) B-3: Grivory G-21 (EMS; amorphous polyamide resin) B-4: Prime Polypro F113G (Prime Polymer; PP homopolymer) B-5: MODIC AP P502 (Mitsubishi Chemical; amorphous and adhesive polyolefin) | | | | | |

As can be seen from the results of example 2 and comparative examples 4 through 7 described above, in the case where a polycarbonate resin and an amorphous polyamide resin are combined and subjected to coextrusion molding, a sheet having a fine uneven shape transferred thereto at a high transfer ratio can be manufactured by molding although the sheet is thin. It is seen that in the case where a polyolefin-based resin is used, any of various problems including curl, peeling at the interface, adhesion to the roll and the like occurs during the molding, and a good sheet is not manufactured by molding.

### EXAMPLE 3

In example 3, the grade of the polycarbonate resin was changed to Iupilon H-4000N produced by Mitsubishi Engineering-Plastics Corporation. Except for this point, sheeting was performed in exactly the same manner as in example 2. No trouble or the like occurred during the molding, and a multi-layer prism sheet having a high level of external appearance was obtained. The prism transfer ratio of the obtained prism sheet was 83%, and the peel strength between the polycarbonate resin layer and the amorphous polyamide resin layer was 3.1 N/m.

### EXAMPLE 4

In example 4, exactly the same materials as those in example 3 were used. The layering structure was inverted so that a fine uneven shape would be transferred to a surface of the amorphous polyamide resin layer (see FIG. 3). In accordance with the change of the layering structure, the set temperatures of the rolls were changed. The set temperature of the shaping cooling roll was 120°C, and the set temperature of the pressure-contact metal elastic roll was 135°C. The molding was performed with no problem, and a multi-layer prism sheet having a good external appearance was obtained. The prism transfer ratio of the prims sheet was 89%, and the peel strength between the polycarbonate resin layer and the amorphous polyamide resin layer was 4.4 N/m.

### COMPARATIVE EXAMPLE 8

In comparative example 8, only Grivory G-21 (Tg: 125°C), i.e., an amorphous polyamide resin produced by EMS, was used as the amorphous polyamide resin to manufacture a single-layer prism sheet having a thickness of about 130 µm by molding. The main molding conditions were substantially the same as those in example 4, except that the set temperature of the pressure-contact metal elastic roll was decreased to 110°C to prevent adhesion of the resin. The transfer ratio of the prism sheet was low at 69%. The results of examples 3 and 4 and comparative example 8 are shown in Table 3.

**[Table 3]**

| | Example 3 | Example 4 | Comparative example 8 |
|---|---|---|---|
| PC resin type | A-3 | A-3 | None |
| PC resin Tg (°C) | 142 | 142 | - |
| PC resin viscosity (Pa·s) | 300 | 300 | - |
| PA resin type | B-3 | B-3 | B-3 |
| PA resin Tg (°C) | 125 | 125 | 125 |
| PA resin viscosity (Pa·s) | 280 | 280 | 280 |
| Surface to which the fine uneven shape is transferred | PC | PA | PA |
| PC layer thickness (µm) | 170 | 170 | - |
| PA layer thickness (µm) | 130 | 130 | 130 |
| Die temperature (°C) | 270 | 270 | 270 |
| Shaping cooling roll temperature (°C) | 135 | 120 | 120 |
| Pressure-contact roll temperature (°C) | 120 | 135 | 110 |
| Linear pressure (kg/cm) | 20 | 20 | 20 |
| Linear viscosity (m/min) | 3 | 3 | 3 |
| Transfer ratio (%) | 88 | 89 | 69 |
| Peel strength (N/m) | 3.1 | 4.4 | |

| | | | |
|---|---|---|---|
| A-3: Iupilon H-4000N (Mitsubishi Engineering-Plastics) B-3: Grivory G-21 (EMS; amorphous polyamide resin) | | | |

As can be seen from the results of examples 3 and 4 and comparative example 8 described above, in the case where a polycarbonate resin and an amorphous polyamide resin are combined and subjected to coextrusion molding, a sheet having a fine uneven shape transferred thereto at a high transfer ratio can be manufactured by molding although the sheet is thin. The shape may be provided to the amorphous polyamide resin layer as well as the polycarbonate resin layer.

## Claims

1. An optical sheet including a first layer comprising a polycarbonate resin and a second layer comprising an amorphous polyamide resin, the first layer and the second layer being layered by coextrusion molding, wherein:
the first layer and the second layer are peelable from each other at an interface therebetween;
at least one of a surface of the first layer not a surface as the interface, and a surface of the second layer not a surface as the interface, has a fine uneven shape formed thereat; and
the polycarbonate resin contained in the first layer and the amorphous polyamide resin contained in the second layer have a glass transition temperature difference in the range of ±40°C.

2. The optical sheet according to claim 1, wherein the first layer and/or the second layer has a thickness in the range of 50 to 250 µm.

3. The optical sheet according to claim 1 or 2, wherein the polycarbonate resin contained in the first layer and the amorphous polyamide resin contained in the second layer have a melt viscosity ratio in the range of 1:5 to 5:1 at 260°C and at a shearing speed of 100 s⁻¹.

4. The optical sheet according to any one of claims 1 to 3, wherein a peel strength between the first layer and the second layer in a 180-degree peel test is in the range of 1 to 100 N/m in the case where a test speed is 150 mm/min and one of the first layer and the second layer to be chucked with a clamp for scanning has a thickness of 100 to 150 µm.

5. The optical sheet according to any one of claims 1 to 4, wherein the fine uneven shape is either one of a matte shape, a prism shape and a microlens shape.

6. A method for manufacturing an optical sheet, comprising the step of layering a first layer comprising a polycarbonate resin and a second layer comprising an amorphous polyamide resin to form a layered body having a sheet shape by coextrusion molding;
wherein the layered body including the first layer and the second layer is pressed between a shaping cooling roll having a fine uneven shape at a surface thereof and a pressure-contact roll to provide a fine uneven shape to at least one of the surfaces of the layered body;
wherein the optical sheet is as defined in any one of claims 1 to 5.

7. The method for manufacturing an optical sheet according to claim 6, wherein the pressure-contact roll is a metal rigid roll or a metal elastic roll having a surface plated with a metal material.

## Patentansprüche

1. Optische Folie mit einer ersten Schicht, die ein Polycarbonatharz umfasst, und einer zweiten Schicht, die ein amorphes Polyamidharz umfasst, wobei die erste Schicht und die zweite Schicht durch ein Coextrusionsformverfahren geschichtet sind, wobei:
die erste Schicht und die zweite Schicht an einer zwischen ihnen liegenden Grenzfläche voneinander abziehbar sind;
auf mindestens einer von einer Oberfläche der ersten Schicht, die nicht die Grenzfläche ist, und einer Oberfläche der zweiten Schicht, die nicht die Grenzfläche ist, eine feine unebene Form ausgebildet ist; und
das in der ersten Schicht enthaltene Polycarbonatharz und das in der zweiten Schicht enthaltene amorphe Polyamidharz eine Glasübergangstemperaturdifferenz im Bereich von ±40°C aufweisen.

2. Optische Folie gemäß Anspruch 1, wobei die erste Schicht und/oder die zweite Schicht eine Dicke im Bereich von 50 bis 250 µm aufweist.

3. Optische Folie gemäß Anspruch 1 oder 2, wobei das in der ersten Schicht enthaltene Polycarbonatharz und das in der zweiten Schicht enthaltene amorphe Polyamidharz ein Schmelzviskositätsverhältnis im Bereich von 1:5 bis 5:1 bei 260°C und einer Schergeschwindigkeit von 100 s⁻¹ aufweisen.

4. Optische Folie gemäß einem der Ansprüche 1 bis 3, wobei eine Abziehfestigkeit zwischen der ersten Schicht und der zweiten Schicht in einem 180-Grad-Abziehtest im Bereich von 1 bis 100 N/m liegt, wenn eine Testgeschwindigkeit 150 mm/min beträgt und eine von der ersten Schicht und der zweiten Schicht, die mit einer Klemme zum Überprüfen eingespannt wird, eine Dicke von 100 bis 150 µm aufweist.

5. Optische Folie gemäß einem der Ansprüche 1 bis 4, wobei die feine unebene Form eine beliebige von einer matten Form, einer prismatischen Form und einer Mikrolinsenform ist.

6. Verfahren zur Herstellung einer optischen Folie, umfassend einen Schritt, bei dem eine erste Schicht, die ein Polycarbonatharz umfasst, und eine zweite Schicht, die ein amorphes Polyamidharz umfasst, geschichtet werden, um durch ein Coextrusionsformverfahren einen Schichtkörper mit einer Folienform zu bilden;
wobei der Schichtkörper mit der ersten Schicht und der zweiten Schicht zwischen einer formgebenden Kühlwalze mit einer feinen unebenen Form auf einer Oberfläche und einer Druckkontaktwalze gepresst wird, um eine feine unebene Form auf mindestens einer der Oberflächen des Schichtkörpers bereitzustellen;
wobei die optische Folie wie in einem der Ansprüche 1 bis 5 definiert ist.

7. Verfahren zur Herstellung einer optischen Folie gemäß Anspruch 6, wobei die Druckkontaktwalze eine starre Metallwalze oder eine elastische Metallwalze mit einer mit einem Metallmaterial beschichteten Oberfläche ist.

## Revendications

1. Feuille optique comportant une première couche comprenant une résine polycarbonate et une deuxième couche comprenant une résine polyamide amorphe, la première couche et la deuxième couche étant disposées en couches par moulage par coextrusion, dans laquelle :
la première couche et la deuxième couche sont pelable l'une de l'autre à une interface de celles-ci ;
au moins l'une d'une surface de la première couche pas une surface à l'interface, et d'une surface de la deuxième couche pas une surface à l'interface, a une forme irrégulière fine formée sur celle-ci ; et
la résine polycarbonate contenue dans la première couche et la résine polyamide amorphe contenue dans la deuxième couche ont une différence de température de transition vitreuse dans le domaine de ±40°C.

2. La feuille optique selon la revendication 1, dans laquelle la première couche et/ou la deuxième couche a une épaisseur dans le domaine de 50 à 250 µm.

3. La feuille optique selon la revendication 1 ou 2, dans laquelle la résine polycarbonate contenue dans la première couche et la résine polyamide amorphe contenue dans la deuxième couche ont un rapport de viscosité à l'état fondu dans le domaine de 1:5 à 5:1 à 260°C et une vitesse de cisaillement de 100 s⁻¹.

4. La feuille optique selon l'une quelconque des revendications 1 à 3, dans laquelle une résistance au pelage entre la première couche et la deuxième couche dans un test de pelage à 180 degrés est dans le domaine de 1 à 100 N/m dans le cas où une vitesse de test est de 150 mm/min et l'une de la première couche et de la deuxième couche à être serrée avec une pince de balayage a une épaisseur de 100 à 150 µm.

5. La feuille optique selon l'une quelconque des revendications 1 à 4, dans laquelle la forme irrégulière fine est l'une d'une forme mate, une forme de prisme et une forme de microlentille.

6. Procédé de fabrication d'une feuille optique, comprenant l'étape de disposition en couches d'une première couche comprenant une résine polycarbonate et d'une deuxième couche comprenant une résine polyamide amorphe pour former un corps stratifié ayant une forme de feuille par moulage par coextrusion ;
dans lequel le corps stratifié comportant la première couche et la deuxième couche est pressé entre un rouleau de refroidissement de profilage ayant une forme irrégulière fine à une surface de celle-ci et un rouleau de contact-pression pour fournir une forme irrégulière fine à un moins l'une des surfaces du corps stratifié ;
dans lequel la feuille optique est telle que définie dans l'une quelconque des revendications 1 à 5.

7. Le procédé de fabrication d'une feuille optique selon la revendication 6, dans lequel le rouleau de pression-contact est un rouleau rigide de métal ou un rouleau élastique de métal ayant une surface plaquée avec un matériau métallique.
